# EUROPEAN PATENT APPLICATION

(11) **EP 3 217 699 A1**
(43) Date of publication of application: **13.09.2017**
(21) Application number: 14905321.7
(22) Date of filing: 05.11.2014
(51) Int. Cl.: H04W 16/14, H04W 4/00

(54) **WIRELESS COMMUNICATION SYSTEM, BASE STATION APPARATUS AND TERMINAL APPARATUS**

(71) Applicant: Fujitsu Limited, Kawasaki-shi, Kanagawa 211-8588 (JP)
(72) Inventor: TANAKA, Yoshinori, Kawasaki-shi Kanagawa 211-8588 (JP)
(74) Representative: Wilding, Frances Ward
(86) International application number: PCT/JP2014/079377
(87) International publication number: WO 2016/071979

(57) **Abstract**

A wireless communication system (100) according to one embodiment performs wireless communication using a first bandwidth dedicated to the wireless communication system, and a second bandwidth shared between the wireless communication system and another wireless communication system, in synchronization with a subframe of the first bandwidth. The wireless communication system (100) also includes a base station apparatus (110) that starts transmitting, when an idle state of the second bandwidth is detected, a data signal having a subframe length over the second bandwidth, even before a subframe period ends, and that transmits control information for decoding the data signal and timing information indicating timing at which the data signal starts being transmitted over the first bandwidth, at a boundary of the next subframe. The wireless communication system (100) also includes a terminal apparatus that retains the data signal having been transmitted over the second bandwidth, and that decodes data from the retained data signal using the timing information and the control information having been transmitted over the first bandwidth.

## Description

### [Technical Field]

The present invention relates to a wireless communication system, a base station apparatus, and a terminal apparatus.

### [Background Art]

In order to achieve a higher speed and a larger capacity in the wireless communications performed in wireless communication systems such as a mobile telephone system, some discussions about next-generation wireless communication technologies have recently been made. For example, having been discussed in a communication standard referred to as Long Term Evolution (LTE), for example, is a technology that establishes a communication using a carrier in a frequency band that requires a license (licensed (LC) band carrier), and a carrier in a frequency band that does not require a license (unlicensed (UC) band carrier).

In this example, because a base station apparatus in the LTE system performs data communication in a manner synchronized with a predetermined subframe timing, some gap time may occur between the time at which an idle channel is detected and the time at which the data communication is started. Because other base station apparatuses or access points communicate data in a manner unrelated to the subframe timing, another base station apparatus or an access point may use the idle channel having been detected by the base station apparatus, during the gap time, and as a result, the base station apparatus may become incapable of starting its data communication. Disclosed in response to this issue is a technology for reserving the idle channel by transmitting a dummy signal during the gap time.

### [Citation List]

### [Non Patent Citation]

Patent Document 1: U.S. Patent No. 2014/0036853

### [Summary of Invention]

### [Technical Problem]

The above-described conventional technology, however, may result in a lower throughput, because transmitted during the gap time is a dummy signal, with no data communicated.

According to one aspect, an object of the present invention is to provide a wireless communication system, a base station apparatus, and a terminal apparatus capable of suppressing a reduction in the throughput.

### [Solution to Problem]

A wireless communication system disclosed in this application, according to an aspect, performs wireless communication using a first bandwidth dedicated to the wireless communication system, and a second bandwidth shared between the wireless communication system and another wireless communication system. The wireless communication system includes a base station apparatus that starts transmitting, when an idle state of the second bandwidth is detected, a data signal having a subframe length over the second bandwidth even before a subframe period ends, and that transmits control information for decoding the data signal and timing information indicating timing at which the data signal starts being transmitted over the first bandwidth, at a border of a next subframe. The wireless communication system includes a terminal apparatus that retains the data signal having been transmitted over the second bandwidth, and that decodes data from the retained data signal using the timing information and the control information having been transmitted over the first bandwidth.

### [Advantageous Effects of Invention]

According to one aspect of the present invention, a reduction in the throughput can be suppressed.

### [Brief Description of Drawings]

FIG. 1 is a schematic illustrating an example of a wireless communication system according to a first embodiment of the present invention.
FIG. 2 is a schematic illustrating an example of a functional configuration of a base station apparatus according to the first embodiment.
FIG. 3 is a schematic illustrating an example of a functional configuration of a terminal apparatus according to the first embodiment.
FIG. 4 is a schematic illustrating an example of an operation in which the base station apparatus according to the first embodiment transmits a data signal over a UC.
FIG. 5 is a schematic explaining an example of a process in which the base station apparatus outputs a dummy signal in the first embodiment.
FIG. 6 is a flowchart for explaining an example of the sequence of a process performed in the wireless communication system according to the first embodiment.
FIG. 7 is a schematic illustrating an example of a downlink transmission performed in a wireless communication system according to a second embodiment of the present invention.
FIG. 8 is a schematic illustrating an example of an operation in which a base station apparatus according to a third embodiment of the present invention transmits a data signal over the UC.
FIG. 9 is a flowchart for explaining an example of the sequence of a process performed in the wireless communication system according to the third embodiment.
FIG. 10 is a schematic illustrating an example of a hardware configuration of an eNB.

### [Embodiments for Carrying Out the Invention]

Some embodiments of a wireless communication system, a base station apparatus, and a terminal apparatus according to the present invention will now be explained in detail with reference to some drawings. The embodiments of the wireless communication system, the base station apparatus, and the terminal apparatus disclosed herein are however not limited to those described below.

### First Embodiment

### [Example of Wireless Communication System]

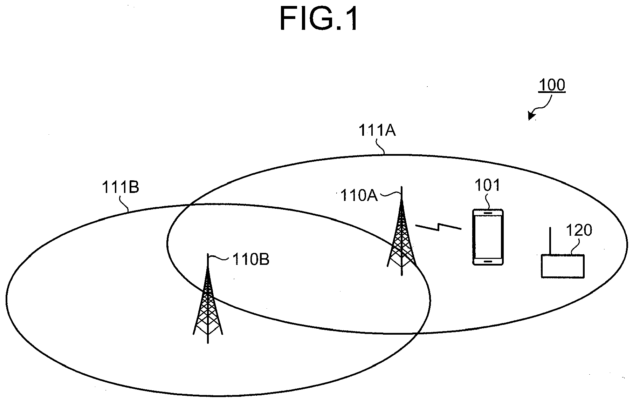

FIG. 1 is a schematic illustrating an example of a wireless communication system according to a first embodiment of the present invention. As illustrated in FIG. 1, this wireless communication system 100 according to the first embodiment includes a base station apparatus 110A, a base station apparatus 110B, an access point 120, and a terminal apparatus 101. A cell 111A is a cell formed by the base station apparatus 110A. A cell 111B is a cell formed by the base station apparatus 110B. The terminal apparatus 101 is located within the cell 111A, and communicates wirelessly with the base station apparatus 110A.

The base station apparatus 110A and the terminal apparatus 101 communicate wirelessly via LTE, as an example. In such a case, the base station apparatus 110A is an evolved Node B (eNB) as defined in LTE, as an example. The terminal apparatus 101 is user equipment (UE) (user terminal) as defined in LTE, as an example. In the explanation hereunder, the base station apparatus 110A and the terminal apparatus 101 are sometimes referred to as an LTE system.

The base station apparatus 110A and the terminal apparatus 101 communicate wirelessly with each other using a first bandwidth that is dedicated to their system, and a second bandwidth that is shared between their system and another wireless communication system. An example of the first bandwidth is a licensed band carrier (LC) in the 2-gigahertz band (a carrier in a band requiring a license). An example of the second bandwidth is an unlicensed band carrier (UC) in the 5-gigahertz band (a carrier in a band not requiring a license).

The second bandwidth is a bandwidth also used in, for example, a wireless local area network (LAN) system. The second bandwidth may also be a bandwidth that is shared with another LTE system (belonging to another provider) that is different from the wireless communication system 100, for example.

For example, in the wireless communication system 100, the first bandwidth is used as a primary component carrier (PCC), and the second bandwidth is used as a secondary component carrier (SCC).

The access point 120 is located inside the cell 111A, and is a router communicating wirelessly with the terminal apparatus 101. For example, the access point 120 communicates with the terminal apparatus 101 using the second bandwidth, or via Wi-Fi (registered trademark), for example.

The base station apparatus 110B is a base station provided by an operator that is different from that of the base station apparatus 110A, and communicates wirelessly with the terminal apparatus 101 using the LC and the UC, for example, in the same manner as the base station apparatus 110A. In the explanation hereunder, it is assumed that the base station apparatus 110A and the base station apparatus 110B have the same functions, and these base station apparatuses 110A and 110B are referred to as base station apparatuses 110.

To transmit data over a data channel in the LTE system, the base station apparatus 110 transmits the data using the first bandwidth and the second bandwidth. An example of the data channel in the LTE system includes a physical downlink shared channel (PDSCH). Another example of the data channel in the LTE system includes a physical uplink shared channel (PUSCH).

The base station apparatus 110 transmits data in a manner synchronized with the subframe period. For example, the base station apparatus 110 starts transmitting a data signal at a subframe timing that is at the beginning of the subframe period. In this example, to communicate data with the base station apparatus 110, the terminal apparatus 101 acquires the data by decoding the received data signal, following the subframe timing of the base station apparatus 110.

In the explanation hereunder, a period from a subframe timing to the next subframe timing is referred to as a subframe period. One subframe period has 0^{th} to 13^{th} symbol periods. Alternatively, the time period with which the base station apparatus 110 and the terminal apparatus 101 synchronize in the data communication may have another name.

An example of a process performed by the base station apparatus 110 will now be explained. For example, the base station apparatus 110 detects an idle resource in the UC by performing carrier sensing (CS). Specifically, when a busy channel becomes idle, the base station apparatus 110 waits for a distributed coordination function interframe space (DIFS) and a random backoff period to elapse. If the idle channel has remained unused at the point in time at which the DIFS and the backoff period end, the base station apparatus 110 detects the channel as an idle resource.

The base station apparatus 110 then transmits a downlink (DL) assignment indicating that the base station apparatus 110 will perform a DL transmission over the LC. The DL assignment stores therein, as control information for decoding the data signal output via the UC, frequency scheduling information such as the position of a physical resource block (PRB), and control information such as channel encoding and adaptive modulation and coding (AMC). The DL assignment is transmitted using a physical downlink control channel (PDCCH) corresponding to a three-symbol period at most from the beginning of the subframe, or an enhanced physical downlink control channel (EPDCCH) set to some position of the subframe.

The base station apparatus 110 generates a data signal having a data length that is the same as the length of the subframe period, outputs the generated data signal over the UC in synchronization with the subframe timing. The DL assignment is information that is also referred to as a DL assign or a DL grant, and that is transmitted using a PDCCH in the three symbols at the beginning of the subframe, or using an EPDCCH set to some position in the subframe, for example.

The UC is not only used by the base station apparatus 110A but also by the base station apparatus 110B or the access point 120 having been synchronized with a subframe timing that is different from that with which the base station apparatus 110A is synchronized. Therefore, the base station apparatus 110A may have the idle channel intercepted by the base station apparatus 110B or the access point 120, during the time from when the busy channel becomes idle to when the next subframe timing arrives. However, if the base station apparatus 110A transmits a dummy signal for reserving the idle channel during the period from when the channel becomes idle to when the subframe timing arrives, no data can be transmitted, and therefore, the throughput will decline.

To address this issue, when the base station apparatus 110 detects the idle state of an UC resource, that is, if the UC remains idle even when the DIFS and the backoff period expire from when the UC has become idle, the base station apparatus 110 starts transmitting a data signal over the UC, even if the end of a subframe period has not been expired. The base station apparatus 110 also generates timing information indicating the timing at which the transmission of the data signal over the UC is started. For example, the base station apparatus 110 generates the timing information storing therein the symbol number in which the transmission of the data signal over the UC is started. The base station apparatus 110 then transmits the timing information, as well as the control information for decoding the data signal, over the LC.

For example, when an idle resource in the UC is detected, the base station apparatus 110 transmits the data signal immediately over the UC. The base station apparatus 110 also generates the timing information indicating the symbol in which the data signal is transmitted over the UC. The base station apparatus 110 then transmits the timing information, as well as the DL assignment, over the LC, in a subframe period following the subframe period in which the data signal has been transmitted over the UC.

When the base station apparatus 110 has transmitted the data signal over the UC without establishing a synchronization with the subframe timing, the terminal apparatus 101 that is the receiver of the data signal will not be able to decode the data signal correctly, because the position of the head of the data signal is unknown. However, the base station apparatus 110 according to the embodiment transmits timing information indicating the timing at which the transmission of the data signal over the UC is started.

The terminal apparatus 101 therefore retains the data signal received over the UC in a predetermined buffer. The terminal apparatus 101 also identifies the position of the head of the data signal from the timing information received in the subframe period following the subframe period in which the base station apparatus 110 has transmitted the data signal over the UC, and demodulates the data signal and decodes the data using the control information.

In the manner described above, when the UC has become idle, the base station apparatus 110 transmits a data signal over the UC in a manner disregarding the subframe timing. The base station apparatus 110 then transmits the timing information indicating the timing at which the data signal has been transmitted over the UC, as well as the DL assignment, over the LC. The terminal apparatus 101 then retains the data signal received over the UC in the buffer, and decodes the data signal using the timing information and the DL assignment received over the LC. In this manner, because data can be communicated during the time period from when the idle channel in the UC is detected to when the next subframe timing arrives, the wireless communication system 100 can improve the throughput.

### [Exemplary Configuration of Base Station Device]

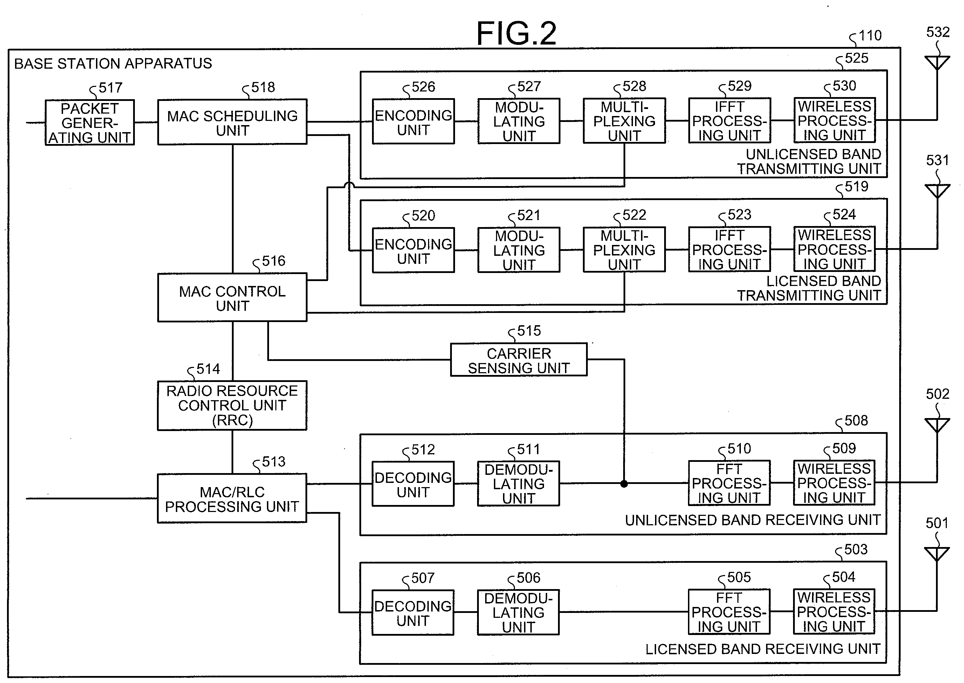

An example of the base station apparatus will now be explained with reference to FIG. 2. FIG. 2 is a schematic illustrating an example of a functional configuration of the base station apparatus according to the first embodiment. The base station apparatus 110 according to the first embodiment can be implemented as the base station apparatus 110 illustrated in FIG. 2, for example.

The base station apparatus 110 illustrated in FIG. 2 includes antennas 501, 502, a licensed band receiving unit 503, an unlicensed band receiving unit 508, and a media access control (MAC)/ radio link control (RLC) processing unit 513. The base station apparatus 110 also includes a radio resource control unit (RRC) 514, a carrier sensing unit 515, a MAC control unit 516, a packet generating unit 517, and a MAC scheduling unit 518. The base station apparatus 110 also includes a licensed band transmitting unit 519, an unlicensed band transmitting unit 525, and antennas 531, 532.

Each of the antennas 501, 502 receives signals having been wirelessly transmitted from other wireless communication apparatuses. The antennas 501, 502 then output the received signals to the licensed band receiving unit 503 and the unlicensed band receiving unit 508, respectively. Alternatively, the base station apparatus 110 may have one antenna in which the functions of the antennas 501, 502 are integrated.

The licensed band receiving unit 503 performs the process of receiving via the licensed (LC) band. For example, the licensed band receiving unit 503 includes a wireless processing unit 504, a fast Fourier transform (FFT) processing unit 505, a demodulating unit 506, and a decoding unit 507.

The wireless processing unit 504 performs a wireless process to the signal output from the antenna 501. The wireless process performed by the wireless processing unit 504 includes a frequency conversion from the high-frequency band to the baseband, for example. The wireless processing unit 504 then outputs the signal applied with the wireless process to the FFT processing unit 505.

The FFT processing unit 505 performs an FFT process to the signal output from the wireless processing unit 504. Through this process, the signal in the time domain is converted into that in the frequency domain. The FFT processing unit 505 then outputs the signal applied with the FFT process to the demodulating unit 506.

The demodulating unit 506 demodulates the signal output from the FFT processing unit 505. The demodulating unit 506 then outputs the signal resultant of the demodulation to the decoding unit 507. The decoding unit 507 then decodes the signal output from the demodulating unit 506. The decoding unit 507 then outputs the data resultant of decoding to the MAC/RLC processing unit 513.

The unlicensed band receiving unit 508 performs the process of receiving via the unlicensed band. For example, the unlicensed band receiving unit 508 includes a wireless processing unit 509, an FFT processing unit 510, a demodulating unit 511, and a decoding unit 512.

The wireless processing unit 509 performs the wireless process to the signal output from the antenna 502. The wireless process performed by the wireless processing unit 509 includes a frequency conversion from the high-frequency band to the baseband, for example. The wireless processing unit 509 outputs the signal applied with the wireless process to the FFT processing unit 510.

The FFT processing unit 510 performs the FFT process to the signal output from the wireless processing unit 509. Through this process, the signal in the time domain is converted into that in the frequency domain. The FFT processing unit 510 then outputs the signal applied with the FFT process to the demodulating unit 511 and the carrier sensing unit 515.

The demodulating unit 511 demodulates the signal output from the FFT processing unit 510. The demodulating unit 511 outputs the signal resultant of the demodulation to the decoding unit 512. The decoding unit 512 decodes the signal output from the demodulating unit 511. The decoding unit 512 then outputs the data resultant of decoding to the MAC/RLC processing unit 513.

The MAC/RLC processing unit 513 performs the process in each of the MAC layer and the RLC layer, based on the data output from the decoding unit 507. The MAC/RLC processing unit 513 outputs the data resultant of the processes in the respective layers. The signal output from the MAC/RLC processing unit 513 is input to a processing unit belonging to a higher-level layer in the base station apparatus 110, for example. The MAC/RLC processing unit 513 also outputs control information such as a detection result of a Request to Send (RTS) signal included in the data resultant of the processes in the respective layers to the radio resource control unit 514.

The radio resource control unit 514 performs radio resource control based on the control information output from the MAC/RLC processing unit 513. This radio resource control is a process in a radio resource control (RRC) layer. The radio resource control unit 514 outputs the control information that is based on the radio resource control to the MAC control unit 516.

The carrier sensing unit 515 performs carrier sensing based on the unlicensed-band (UC) signal output from the FFT processing unit 510. The carrier sensing unit 515 then outputs carrier-sensing result information indicating the result of carrier sensing to the MAC control unit 516.

The MAC control unit 516 performs MAC-layer control based on the control information output from the radio resource control unit 514, and the carrier-sensing result information output from the carrier sensing unit 515. The MAC control unit 516 outputs individual control information for the terminal apparatus 101 based on the MAC-layer control, and the RTS signal to a multiplexing unit 522. An example of the individual control information includes a physical downlink control channel (PDCCH).

The MAC control unit 516 also outputs signals such as a data demodulation reference signal (DMRS), a dummy signal, and an RTS signal that are based on the MAC-layer control to the multiplexing unit 528. The MAC control unit 516 also outputs the control information that is based on the MAC-layer control to the MAC scheduling unit 518.

The packet generating unit 517 generates a packet including user data output from the higher-level layer in the base station apparatus 110. The packet generating unit 517 then outputs the generated packet to the MAC scheduling unit 518.

The MAC scheduling unit 518 performs scheduling of the packets output from the packet generating unit 517 in the MAC layer, based on the control information output from the MAC control unit 516. The MAC scheduling unit 518 then outputs the packets to the licensed band transmitting unit 519 and to the unlicensed band transmitting unit 525 based on the scheduling result. For example, the MAC scheduling unit 518 performs scheduling in such a manner that the data signals are transmitted in units of a subframe. In other words, the MAC scheduling unit schedules the packets in such a manner that the length of the data signal transmitted over the LC is matched with the subframe period.

The licensed band transmitting unit 519 performs the process of transmitting via the licensed band. For example, the licensed band transmitting unit 519 includes an encoding unit 520, a modulating unit 521, the multiplexing unit 522, an inverse fast Fourier transform (IFFT) processing unit 523, and a wireless processing unit 524.

The encoding unit 520 encodes a packet output from the MAC scheduling unit 518. The encoding unit 520 outputs the encoded packet to the modulating unit 521. The modulating unit 521 performs a modulation based on the packet output from the encoding unit 520. The modulating unit 521 outputs the signal resultant of the modulation to the multiplexing unit 522.

The multiplexing unit 522 multiplexes the individual control information and the RTS signal output from the MAC control unit 516 over the signal output from the modulating unit 521. The multiplexing unit 522 outputs the signal resultant of the multiplexing to the IFFT processing unit 523.

The IFFT processing unit 523 performs the IFFT process to the signal output from the multiplexing unit 522. Through this process, the signal in the frequency domain is converted into a signal in the time domain. The IFFT processing unit 523 outputs the signal applied with the IFFT process to the wireless processing unit 524.

The wireless processing unit 524 performs the wireless process to the signal output from the IFFT processing unit 523. The wireless process performed by the wireless processing unit 524 includes a frequency conversion from the baseband into the high-frequency band, for example. The wireless processing unit 524 outputs the signal applied with the wireless process to the antenna 531.

The unlicensed band transmitting unit 525 performs a process of transmitting via the unlicensed band. For example, the unlicensed band transmitting unit 525 includes an encoding unit 526, a modulating unit 527, the multiplexing unit 528, an IFFT processing unit 529, and a wireless processing unit 530.

The encoding unit 526 encodes the packet output from the MAC scheduling unit 518. The encoding unit 526 then outputs the encoded packet to the modulating unit 527. The modulating unit 527 performs a modulation based on the packet output from the encoding unit 526. The modulating unit 527 then outputs the signal resultant of the modulation to the multiplexing unit 528.

The multiplexing unit 528 multiplexes the individual control information and the RTS signal output from the MAC control unit 516 over the signal output from the modulating unit 527. The multiplexing unit 528 then outputs the signal resultant of the multiplexing to the IFFT processing unit 529.

The IFFT processing unit 529 performs the IFFT process to the signal output from the multiplexing unit 528. Through this process, the signal in the frequency domain is converted into a signal in the time domain. The IFFT processing unit 529 outputs the signal applied with the IFFT process to the wireless processing unit 530.

The wireless processing unit 530 performs the wireless process to the signal output from the IFFT processing unit 529. The wireless process performed by the wireless processing unit 530 includes a frequency conversion from the baseband into the high-frequency band, for example. The wireless processing unit 530 outputs the signal applied with the wireless process to the antenna 532.

The antenna 531 transmits the signal output from the wireless processing unit 524 wirelessly to another wireless communication apparatus. The antenna 532 transmits the signal output from the wireless processing unit 530 wirelessly to another wireless communication apparatus.

The MAC control unit 516 performs the following process. To begin with, if there is some data to be transmitted, and if the MAC control unit 516 receives the carrier-sensing result information indicating that an idle UC channel has been detected from the carrier sensing unit 515, the MAC control unit 516 waits for the DIFS and the backoff period to expire. If the MAC control unit 516 receives the carrier-sensing result information indicating that an idle UC channel has been detected from the carrier sensing unit 515 after the DIFS and the backoff period expire, the MAC control unit 516 starts transmitting the data signal over the UC.

Specifically, the MAC control unit 516 gives an instruction to the MAC scheduling unit 518 to output a packet to the unlicensed band transmitting unit 525. At this time, the MAC scheduling unit 518 outputs a packet to be transmitted over the UC to the unlicensed band transmitting unit 525. As a result, as soon as an idle UC channel is detected, the base station apparatus 110 starts transmitting a data signal over the UC.

The MAC control unit 516 generates the timing information indicating the timing at which the transmission of the data signal over the UC is started, and outputs the timing information, as well as the DL assignment, to the multiplexing unit 522. At this time, the licensed band transmitting unit 519 outputs the DL assignment and the timing information over the LC, in a manner synchronized with the subframe timing.

In the manner described above, the base station apparatus 110 starts transmitting data as an UC becomes idle, even before a subframe period expires, and transmits the timing information indicating the timing at which the transmission of data is started, over the LC. Therefore, the base station apparatus 110 can improve the throughput.

The timing information only needs to include information enough to enable the data signal to be decoded. For example, the timing information may include the time at which the transmission of the data signal is started, or include a symbol number in which the transmission of the data signal is started. For example, if a symbol number is used as an indication of the timing at which the transmission of the data signal is started, the base station apparatus 110 can reduce the amount of timing information data so that the communication resources can be used effectively.

However, when another base station apparatus or the access point 120 is using a certain channel on the UC, the timing at which such a channel becomes idle does not generally synchronize with the symbols of the base station apparatus 110. Therefore, if a symbol number is used as timing information, the process of decoding the data signal may become difficult, because if the timing at which an idle UC has been detected is not at a beginning of a symbol, it will be unknown at which point of the symbol the data signal has started being transmitted.

When a symbol number is used as the timing information, therefore, the MAC control unit 516 performs the following process. To begin with, if the carrier sensing unit 515 has detected an idle UC channel during one symbol, the MAC control unit 516 keeps outputting a dummy signal to the multiplexing unit 528 until the next symbol period starts. As a result, because the unlicensed band transmitting unit 525 outputs the dummy signal over the UC during the period from when the idle UC channel is detected to when the next symbol period starts, the idle channel can be reserved against any other base station apparatuses.

The MAC control unit 516 gives an instruction to the MAC scheduling unit 518 to output a data signal in the symbol period subsequent to the symbol period in which the carrier sensing unit 515 has detected the idle UC channel. As a result, the MAC scheduling unit 518 schedules the packet so that the data signal having a length equal to the subframe length is output over the UC, from the beginning of the symbol period subsequent to the symbol period in which the idle UC channel is detected.

The MAC control unit 516 also identifies the number assigned to the symbol period subsequent to the symbol period in which the carrier sensing unit 515 has detected the idle UC channel, and generates the timing information indicating the identified symbol period number. The MAC control unit 516 then outputs the generated timing information to the multiplexing unit 522, together with the DL assignment that is to be transmitted in the subframe period subsequent to the subframe period in which the carrier sensing unit 515 has detected the idle UC channel. As a result, the licensed band transmitting unit 519 transmits the DL assignment and the timing information in the subframe period subsequent to the subframe period in which the carrier sensing unit 515 has detected the idle UC channel.

### [Exemplary Configuration of Terminal Device]

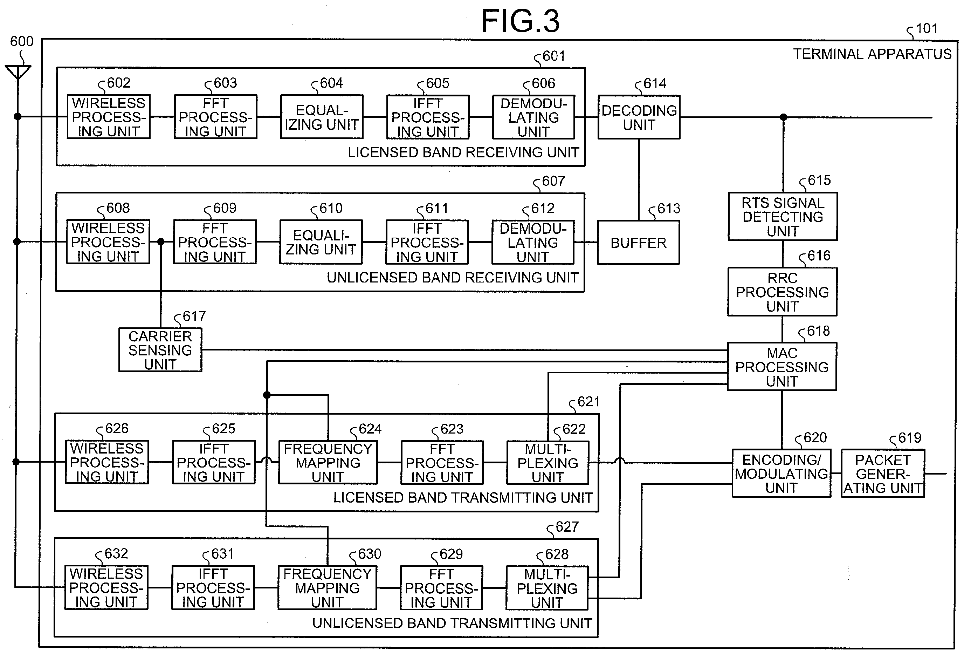

An example of the terminal apparatus 101 will now be explained with reference to FIG. 3. FIG. 3 is a schematic illustrating an example of a functional configuration of the terminal apparatus according to the first embodiment. The terminal apparatus 101 according to the first embodiment can be implemented as the terminal apparatus 101 illustrated in FIG. 3, for example.

The terminal apparatus 101 illustrated in FIG. 3 includes an antenna 600, a licensed band receiving unit 601, an unlicensed band receiving unit 607, a buffer 613, a decoding unit 614, an RTS signal detecting unit 615, an RRC processing unit 616, and a carrier sensing unit 617. The terminal apparatus 101 also includes a MAC processing unit 618, a packet generating unit 619, an encoding/modulating unit 620, a licensed band transmitting unit 621, and an unlicensed band transmitting unit 627.

The antenna 600 receives signals having been wirelessly transmitted by another wireless communication apparatus. The antenna 600 outputs the received signals to the licensed band receiving unit 601 and the unlicensed band receiving unit 607. The antenna 600 also transmits the signals output from the licensed band transmitting unit 621 and the unlicensed band transmitting unit 627 wirelessly to another wireless communication apparatus. The terminal apparatus 101 may also include individual antennas corresponding to the licensed band receiving unit 601, the unlicensed band receiving unit 607, the licensed band transmitting unit 621, and the unlicensed band transmitting unit 627, respectively.

The licensed band receiving unit 601 performs the process of receiving via the licensed band. For example, the licensed band receiving unit 601 includes a wireless processing unit 602, an FFT processing unit 603, an equalizing unit 604, an IFFT processing unit 605, and a demodulating unit 606.

The wireless processing unit 602 performs the wireless process to the signal output from the antenna 600. The wireless process performed by the wireless processing unit 602 includes, for example, a frequency conversion from the high-frequency band to the baseband. The wireless processing unit 602 outputs the signal applied with the wireless process to the FFT processing unit 603.

The FFT processing unit 603 performs the FFT process to the signal output from the wireless processing unit 602. Through this process, the signal in the time domain is converted into that in the frequency domain. The FFT processing unit 603 outputs the signal applied with the FFT process to the equalizing unit 604. The equalizing unit 604 performs a process of equalizing the signal output from the FFT processing unit 603. The equalizing unit 604 outputs the signal applied with the equalizing process to the IFFT processing unit 605.

The IFFT processing unit 605 performs the IFFT process to the signal output from the equalizing unit 604. Through this process, the signal in the frequency domain is converted into a signal in the time domain. The IFFT processing unit 605 outputs the signal applied with the IFFT process to the demodulating unit 606. The demodulating unit 606 demodulates the signal output from the IFFT processing unit 605. The demodulating unit 606 then outputs the signal resultant of the demodulation to the decoding unit 614.

The licensed band receiving unit 601 demodulates the data signal in a manner synchronized with the subframe timing of the base station apparatus that is communicating with the terminal apparatus 101. For example, the licensed band receiving unit 601 receives information such as the timing information and the DL assignment, by demodulating the received data signal based on the subframe timing of the base station apparatus 110.

The unlicensed band receiving unit 607 performs the process of receiving via the unlicensed band. For example, the unlicensed band receiving unit 607 includes a wireless processing unit 608, an FFT processing unit 609, an equalizing unit 610, an IFFT processing unit 611, and a demodulating unit 612.

The wireless processing unit 608 performs the wireless process to the signal output from the antenna 600. The wireless process performed by the wireless processing unit 608 includes, for example, a frequency conversion from the high-frequency band to the baseband. The wireless processing unit 608 outputs the signal applied with the wireless process to the FFT processing unit 609 and the carrier sensing unit 617.

The FFT processing unit 609 performs the FFT process to the data signal. Through this process, the signal in the time domain is converted into that in the frequency domain. The FFT processing unit 609 then outputs the signal applied with the FFT process to the equalizing unit 610. The equalizing unit 610 performs the equalizing process to the signal output from the FFT processing unit 609. The equalizing unit 610 then outputs the signal applied with the equalizing process to the IFFT processing unit 611.

The IFFT processing unit 611 performs the IFFT process to the signal output from the equalizing unit 610. Through this process, the signal in the frequency domain is converted into a signal in the time domain. The IFFT processing unit 611 outputs the signal applied with the IFFT process to the demodulating unit 612. The demodulating unit 612 demodulates the signal output from the IFFT processing unit 611. The demodulating unit 612 then outputs the signal resultant of the demodulation to the buffer 613.

The buffer 613 is a buffer for temporarily retaining an UC data signal. For example, the buffer 613 is a buffer capable of retaining a received data signal for a time period corresponding to at least one subframe, and in which the retained data signal is overwritten based on first-in-first-out (FIFO).

The decoding unit 614 decodes the signals output from the licensed band receiving unit 601 and the unlicensed band receiving unit 607. The decoding unit 614 then outputs the data resultant of decoding. The data output from the decoding unit 614 is input to a processing unit in a higher-level layer and the RTS signal detecting unit 615 in the terminal apparatus 101, for example. The data output from the decoding unit 614 includes user data, for example.

The decoding unit 614 performs the following process to decode the data signal received via the UC correctly. To begin with, the decoding unit 614 acquires the DL assignment and the timing information from the signal having been demodulated by the licensed band receiving unit 601, in a manner synchronized with the subframe timing of the base station apparatus 110. If the acquired DL assignment includes a signal indicating that the data addressed to the terminal apparatus has been transmitted, the decoding unit 614 then identifies the timing at which the data signal is output based on the acquired timing information. The decoding unit 614 then identifies the signal received subsequently to the identified timing, among those stored in the buffer 613, and reads and decodes the identified signal.

The base station apparatus 110 transmits the timing information in a subframe period subsequent to the subframe period in which the transmission of the data signal over the UC is started. Therefore, the terminal apparatus 101 only needs to have a buffer 609 with a capacity for retaining a signal corresponding to one subframe period at most. However, the embodiment is not limited thereto.

For example, if the base station apparatus 110 transmits the timing information in the n^{th} subframe period subsequent to the subframe period in which the output of the data signal via the UC is started at most, the terminal apparatus 101 needs to have a buffer 609 capable of retaining the signals corresponding to the n subframe periods at the most. If the timing information indicates in which one of the symbol periods belonging to a subframe period the data signal has been output, the base station apparatus 110 may transmit the timing information in an order that is different from the order in which the data signals are transmitted.

The RTS signal detecting unit 615 detects the RTS signal transmitted by another wireless communication apparatus, from the data output from the decoding unit 614. The RTS signal detecting unit 615 then outputs the detection information indicating the result of the RTS signal detection to the RRC processing unit 616.

The RRC processing unit 616 performs an RRC layer process based on the RTS signal output from the RTS signal detecting unit 615. The RRC processing unit 616 then outputs the result of the RRC layer process to the MAC processing unit 618.

The carrier sensing unit 617 performs carrier sensing based on the signal output from the wireless processing unit 608. The carrier sensing unit 617 then outputs the carrier-sensing result information indicating the result of the carrier sensing to the MAC processing unit 618.

The MAC processing unit 618 performs a MAC layer process, based on the processing result output from the RRC processing unit 616, and the carrier-sensing result information output from the carrier sensing unit 617. The MAC processing unit 618 then outputs DMRS, a dummy signal, an RTS signal, and the like for the terminal apparatus 101 to the multiplexing units 622, 628 based on the MAC layer process.

The MAC processing unit 618 outputs radio resource assignment information to frequency mapping units 624, 630, based on the MAC layer process. The MAC processing unit 618 also outputs radio resource assignment information to the encoding/modulating unit 620 based on the RRC layer process performed by the RRC processing unit 616. The MAC processing unit 618 checks whether any of the radio resources for enabling the terminal apparatus 101 to communicate is idle, based on the carrier-sensing result information output from the carrier sensing unit 617.

The packet generating unit 619 generates a packet including the user data output from the higher-level layer in the terminal apparatus 101. The packet generating unit 619 then outputs the generated packet to the encoding/modulating unit 620.

The encoding/modulating unit 620 performs encoding and modulation of the packet output from the packet generating unit 619. The encoding/modulating unit 620 then outputs the signal resultant of the encoding and the modulation to the licensed band transmitting unit 621 or the unlicensed band transmitting unit 627, based on the radio resource assignment information output from the MAC processing unit 618.

The licensed band transmitting unit 621 performs the process of transmitting via the licensed band. For example, the licensed band transmitting unit 621 includes the multiplexing unit 622, an FFT processing unit 623, the frequency mapping unit 624, an IFFT processing unit 625, and a wireless processing unit 626. The multiplexing unit 622 multiplexes each of the signals output from the MAC processing unit 618 over the signal output from the encoding/modulating unit 620. The multiplexing unit 622 then outputs the signal resultant of the multiplexing to the FFT processing unit 623.

The FFT processing unit 623 performs the FFT process to the signal output from the multiplexing unit 622. Through this process, the signal in the time domain is converted into that in the frequency domain. The FFT processing unit 623 outputs the signal applied with the FFT process to the frequency mapping unit 624. The frequency mapping unit 624 performs the frequency mapping to the signal output from the FFT processing unit 623, based on the radio resource assignment information output from the MAC processing unit 618. The frequency mapping unit 624 then outputs the signal applied with the frequency mapping to the IFFT processing unit 625.

The IFFT processing unit 625 performs the IFFT process to the signal output from the frequency mapping unit 624. Through this process, the signal in the frequency domain is converted into a signal in the time domain. The IFFT processing unit 625 outputs the signal applied with the IFFT process to the wireless processing unit 626. The wireless processing unit 626 performs the wireless process to the signal output from the IFFT processing unit 625. The wireless process performed by the wireless processing unit 626 includes a frequency conversion from the baseband into the high-frequency band, for example. The wireless processing unit 626 outputs the signal applied with the wireless process to the antenna 600.

The unlicensed band transmitting unit 627 performs the process of transmitting via the unlicensed band. For example, the unlicensed band transmitting unit 627 includes the multiplexing unit 628, an FFT processing unit 629, the frequency mapping unit 630, an IFFT processing unit 631, and a wireless processing unit 632. The multiplexing unit 628 multiplexes each of the signals output from the MAC processing unit 618 over the signal output from the encoding/modulating unit 620. The multiplexing unit 628 then outputs the signal resultant of the multiplexing to the FFT processing unit 629.

The FFT processing unit 629 performs the FFT process to the signal output from the multiplexing unit 628. Through this process, the signal in the time domain is converted into that in the frequency domain. The FFT processing unit 629 outputs the signal applied with the FFT process to the frequency mapping unit 630. The frequency mapping unit 630 performs the frequency mapping to the signal output from FFT processing unit 629, based on the radio resource assignment information output from the MAC processing unit 618. The frequency mapping unit 630 then outputs the signal applied with the frequency mapping to the IFFT processing unit 631.

The IFFT processing unit 631 performs the IFFT process to the signal output from the frequency mapping unit 630. Through this process, the signal in the frequency domain is converted into a signal in the time domain. The IFFT processing unit 631 outputs the signal applied with the IFFT process to the wireless processing unit 632. The wireless processing unit 632 performs the wireless process to the signal output from the IFFT processing unit 631. The wireless process performed by the wireless processing unit 632 includes a frequency conversion from the baseband into the high-frequency band, for example. The wireless processing unit 632 outputs the signal applied with the wireless process to the antenna 600.

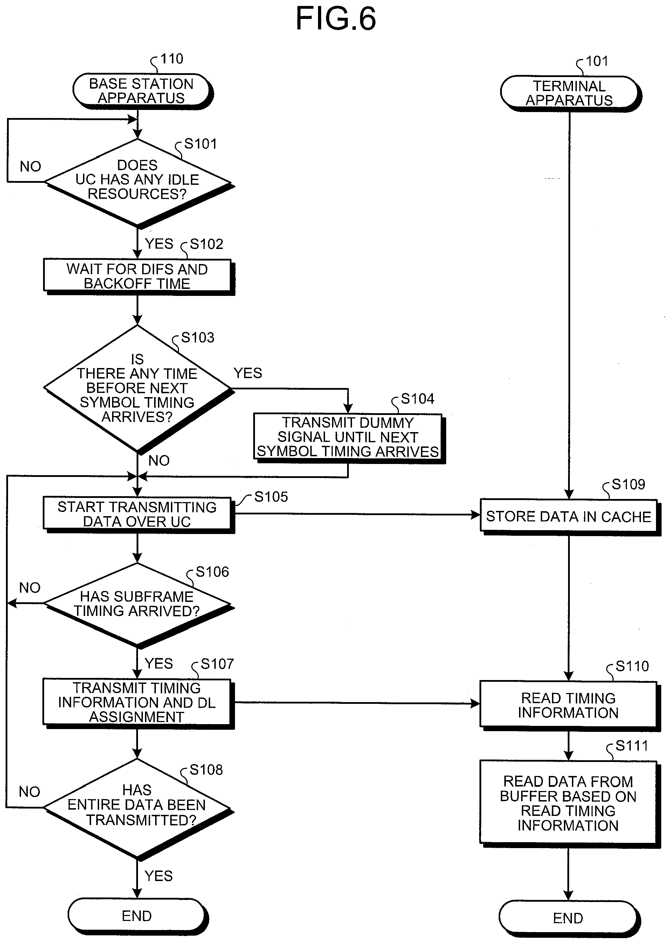

Explained in FIG. 6 is an example in which the same antenna 600 is used for wireless transmissions and wireless receptions, but the terminal apparatus 101 may also be provided with an antenna for wireless transmissions and another antenna for wireless receptions.

### [Example of Operation of Wireless Communication System]

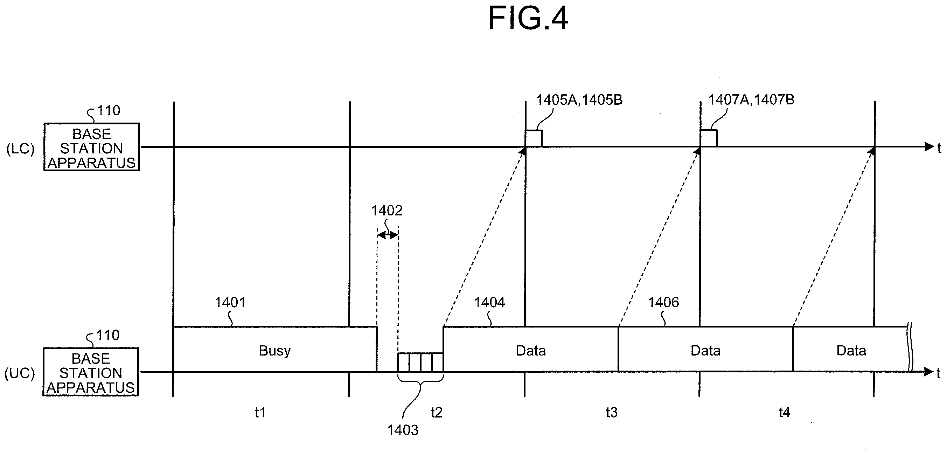

An example of the operation in which the base station apparatus 110 transmits a data signal over the UC will now be explained with reference to FIG. 4. FIG. 4 is a schematic illustrating an example of the operation in which the base station apparatus according to the first embodiment transmits a data signal over the UC. In FIG. 4, the horizontal axis represents the time (t) in the units of a subframe. Data output by the base station apparatus 110 over the LC and data output by the base station apparatus 110 over the UC are illustrated in FIG. 4.

In the example illustrated in FIG. 4, it is assumed that the UC is at a busy state 1401 (Busy) during the subframe period t1 to some point in time in the subframe period t2, as a result of another LTE system, such as the access point 120 or another base station apparatus, communicating data over the UC. Under such an assumption, if a piece of DL data is generated during the subframe period t1, for example, the base station apparatus 110 performs carrier sensing, and checks for the presence of any idle UC channel. However, because the UC is at the busy state 1401 during the subframe period t1 to some point in time in the subframe period t2, the base station apparatus 110 waits until the UC becomes idle.

The busy state 1401 of the UC then ends during the subframe period t2. In such a case, if no new busy state is detected during the backoff time 1403 that is subsequent to the expiration of a DIFS time 1402 starting from the end of the busy state 1401, the base station apparatus 110 starts transmitting a data signal 1404 (Data) having the same length as the subframe period.

The base station apparatus 110 also generates timing information indicating the timing at which the transmission of the data signal 1404 is started. The base station apparatus 110 then transmits a DL assignment 1405A and the timing information 1405B over the LC, in the subframe period t3 subsequent to the subframe period t2 in which the transmission of the data signal 1404 is started. In such a case, for example, the terminal apparatus 101 decodes the data signal 1404 using the DL assignment 1405A and the timing information 1405B received in the subframe period t3.

If there is any data to be transmitted continuously, the base station apparatus 110 generates a data signal 1406 storing therein such data, and starts transmitting the data signal 1406 after the transmission of the data signal 1404 is completed in the subframe period t3. The base station apparatus 110 generates the timing information indicating the timing at which the data signal 1406 is transmitted. The base station apparatus 110 then transmits a DL assignment 1407A and the timing information 1407B indicating the timing at which the data signal 1406 is transmitted over the LC, at the beginning of the subframe period t4. In such a case, for example, the terminal apparatus 101 decodes the data signal 1406 using the DL assignment 1407A and the timing information 1407B received in the subframe period t4.

In the manner described above, the base station apparatus 110 can start communicating data over the UC even when an idle UC channel is detected at a timing before the end of a subframe period. The terminal apparatus 101 can also identify the timing at which the data signal is transmitted over the UC based on the timing information transmitted in a manner synchronized with the subframe timing, even when the base station apparatus 110 starts communicating data over the UC before a subframe period ends. In this manner, because there is no wasted gap time, the wireless communication system 100 can improve the throughput of the data communication.

Subsequently to the subframe period t2, the base station apparatus 110 transmits data signals without establishing synchronization with the subframe timing. When the data signals are to be output continuously (burst), the base station apparatus 110 does not transmit any data signal before the arrival of the end of a subframe period in which the base station apparatus 110 has transmitted the last data signal. The base station apparatus 110 either appends timing information indicating the timing at which the last data signal is transmitted to the DL assignment corresponding to a subframe period subsequent to the subframe period in which the burst is ended, or appends flag information indicating the timing is the same as the timing in the previous timing information.

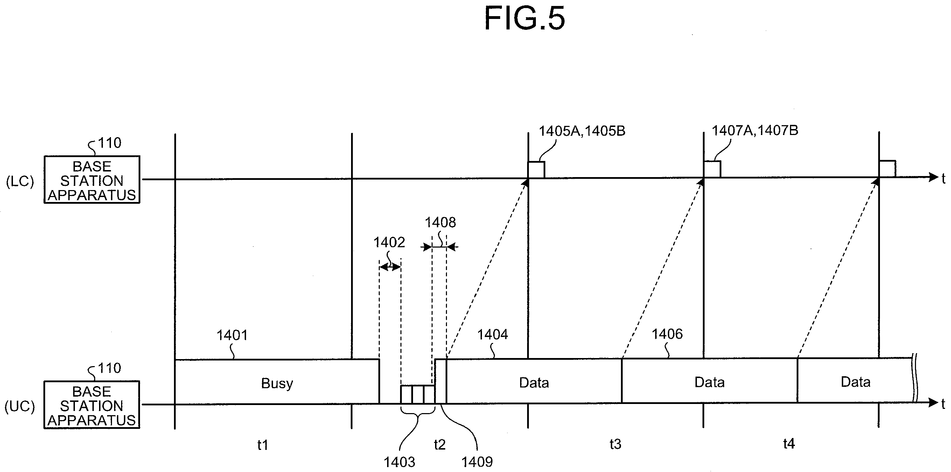

An example of a process in which the base station apparatus 110 transmits a data signal after transmitting a dummy signal will now be explained with reference to FIG. 5. FIG. 5 is a schematic explaining an example of a process in which the base station apparatus outputs a dummy signal in the first embodiment. In the example illustrated in FIG. 5, the horizontal axis represents the time (t) in the units of a subframe unit, and the data output by the base station apparatus 110 over the LC, and the data output by the base station apparatus 110 over the UC are illustrated, in the same manner as the example illustrated in FIG. 4.

In the example illustrated in FIG. 5, the UC is at the busy state 1401 during the subframe period t1 to some point in time in the subframe period t2, as a result of another LTE system communicating data over the UC, and the busy state 1401 ends during the subframe t2. In such a case, if no new busy state is detected during the backoff time 1403 that is subsequent to the expiration of the DIFS time 1402 starting from the end of the busy state 1401, the base station apparatus 110 determines whether the timing at which the data signal 1404 is to be transmitted will be at the beginning of a symbol period.

In the example illustrated in FIG. 5, the backoff time 1403 expires before a symbol period 1408 ends. If the data signal 1404 starts being transmitted before the end of the symbol period 1408, and if the terminal apparatus 110 uses the symbol period number as the timing information, the resources used in a process of decoding data by the terminal apparatus 101 will be increased. By contrast, if the base station apparatus 110 waits for the expiration of the symbol period 1408, another base station apparatus may use the idle UC channel, for example, and the UC channel may enter a busy state, so that the UC channel may no longer be idle in the symbol period subsequent to the symbol period 1408.

The base station apparatus 110 therefore reserves the idle UC channel by outputting a dummy signal 1409, after the expiration of the backoff time 1403, until the symbol period 1408 expires. The base station apparatus 110 then ends outputting the dummy signal 1409 at the same time as the expiration of the symbol period 1408, and starts transmitting the data signal 1404 from a symbol period subsequent to the symbol period 1408.

In the manner described above, when the base station apparatus 110 detects an idle UC channel before the end of a symbol period arrives, the base station apparatus 110 keeps transmitting a dummy signal until the symbol period expires, and then transmits a data signal from the next symbol period. Therefore, the base station apparatus 110 can make an effective use of the communication resources.

### [Sequence of Process Performed by Wireless Communication System]

An example of the sequence of a process performed in the wireless communication system 100 will now be explained with reference to FIG. 6. FIG. 6 is a flowchart for explaining an example of the sequence of a process performed in the wireless communication system according to the first embodiment. In the example illustrated in FIG. 6, the sequence of a process performed by the base station apparatus 110 and the sequence of a process performed by the terminal apparatus 101 are illustrated.

To begin with, the base station apparatus 110 performs carrier sensing, and determines whether the UC has any idle resource (Step S101). If the UC has no idle resource (No at Step S101), the base station apparatus 110 repeats Step S101.

If the UC has some idle resource (Yes at Step S101), the base station apparatus 110 checks for the idle state over a predetermined time (DIFS + backoff time) (Step S102), and determines whether the time at which the backoff time expires is before the end of a symbol period (Step S103). If the time is before the end of a symbol period (Yes at Step S103), the base station apparatus 110 keeps outputting a dummy signal until the symbol period expires (Step S104). If the time is not before the end of a symbol period (No at Step S103), the base station apparatus 110 skips Step S104.

The base station apparatus 110 then starts transmitting data over the UC having the idle state been detected (Step S105). The base station apparatus 110 then determines whether a subframe timing has arrived (Step S106). If a subframe timing has arrived (Yes at Step S106), the base station apparatus 110 performs the following process. In other words, the base station apparatus 110 transmits the timing information indicating the timing at which the transmission of the data signal is started, as well as the DL assignment, over the LC (Step S107).

The base station apparatus 110 determines whether the entire data has been transmitted (Step S108). If the entire data has been transmitted (Yes at Step S108), the process is ended. If the entire data has not been transmitted yet (No at Step S108), the base station apparatus 110 performs Step S105. If a subframe timing has not arrived yet (No at Step S106), the base station apparatus 110 performs Step S105.

The terminal apparatus 101 stores the data signal transmitted by the base station apparatus 110 at Step S105 in the buffer (Step S109). The terminal apparatus 110 then reads the timing at which the transmission of the data signal is started from the timing information transmitted by the base station apparatus 110 at Step S107 (Step S110). The terminal apparatus 101 then reads the data signal from the buffer, and decodes the data signal based on the timing at which the transmission is started (Step S111), and the process is ended.

Illustrated in the example in FIG. 6 is an example in which transmitted is timing information indicating the symbol in which the transmission of the data signal is started, but the embodiment is not limited thereto. For example, the base station apparatus 110 may perform the following process when the timing at which the transmission of the data signal is started does not need to be matched with the beginning of a symbol period. In other words, when an idle UC is detected (Yes at Step S101), the base station apparatus 110 may perform Step S102, and then performs Step S105, without performing the process at Steps S103 and S104.

### [Effects Achieved by First Embodiment]

As described above, the wireless communication system 100 communicating wirelessly using the LC and the UC includes the base station apparatus 110 and the terminal apparatus 101. When an idle UC is detected, the base station apparatus 110 starts transmitting a data signal over the UC, and transmits timing information indicating the timing at which the transmission of the data signal is started, as well as the DL assignment, over the LC. The terminal apparatus 101 then retains the data signal received over the UC in the buffer, and decodes the data from the data signal retained in the buffer, using the DL assignment and the timing information received over the LC. Therefore, the wireless communication system 100 can improve the throughput, because the data can be communicated even in the gap time.

With the wireless communication system 100 performing the process described above, the base station apparatus 110 does not need to be added with any complex functional configuration, and may merely be added with a function for transmitting timing information at which the data signal is transmitted, over the LC. The terminal apparatus 101 can merely be provided with a buffer, and decode the data signal retained in the buffer based on the timing information. Therefore, the wireless communication system 100 can improve the throughput with a simple configuration.

The base station apparatus 110 transmits the DL assignment and the timing information in the subframe period subsequent to the subframe period in which the transmission of the data signal over the UC is started. Therefore, the base station apparatus 110 can reduce the capacity of the buffer needed in the terminal apparatus 101, and reduce the size of the circuitry.

Furthermore, when an idle UC is detected before the end of a symbol period arrives, the base station apparatus 110 transmits a dummy signal until the next symbol period starts. In this manner, the timing information can be simplified, so that the base station apparatus 110 can make an effective use of the communication resources.

### Second Embodiment

### [Example of Operation of Wireless Communication System According to Second Embodiment]

The base station apparatus 110 according to the first embodiment transmit, when an idle UC is detected, a data signal even before the end of a subframe period arrives. When the UC has a plurality of sub-bands, and the sub-bands are to be shared with another LTE system, the base station apparatus 110 may perform the process described above for each of such sub-bands. Such an embodiment will now be explained below, as a second embodiment of the present invention.

The base station apparatus 110 and the terminal apparatus 101 according to the second embodiment are implemented by the same functional configurations as those illustrated in FIG. 2, so that the explanations thereof are omitted below. It is also assumed herein that the process explained below is implemented as a process performed by the carrier sensing unit 515 and the MAC control unit 516 illustrated in FIG. 2.

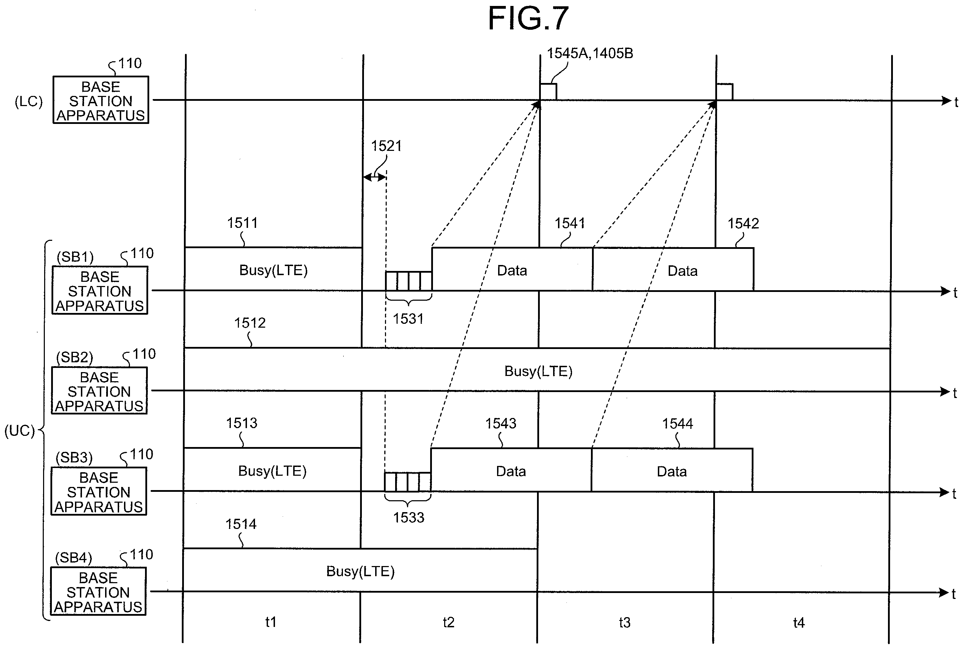

An example of a downlink transmission in which the base station apparatus 110 transmits data to the terminal apparatus 101 will now be explained with reference to FIG. 7. FIG. 7 is a schematic illustrating an example of a downlink transmission performed in the wireless communication system according to the second embodiment. In the example illustrated in FIG. 7, the horizontal axis represents the time (t) in the units of a subframe unit, and the data output by the base station apparatus 110 over the LC, and the data output by the base station apparatus 110 over the UC are illustrated, in the same manner as the example illustrated in FIG. 4.

Explained in the example illustrated in FIG. 7 is a case in which the DL transmission is performed using sub-bands SB1 and SB3, among sub-band SB1 to SB4 in the UC. It is also assumed that the base station apparatus 110 shares the UC with another LTE system. In the example illustrated in FIG. 7, the other LTE system communicates wirelessly in synchronization with the subframe timing of the base station apparatus 110.

For example, in the example illustrated in FIG. 7, the sub-band SB1 is at busy state 1511 during the subframe period t1 because the sub-band is being used by the other LTE system. The sub-band SB2 is at busy state 1512 across the subframe periods t1 to t4 because the sub-band is being used by the other LTE system. The sub-band SB3 is at busy state 1513 during the subframe period t1 because the sub-band is being used by the other LTE system. The sub-band SB4 is at busy state 1514 in the subframe periods t1, t2 because the sub-band is being used by the other LTE system.

In such a case, the base station apparatus 110 performs carrier sensing on each of the sub-bands when DL data is generated during the subframe period t1, for example. To explain with a specific example, the carrier sensing unit 515 illustrated in FIG. 2 performs carrier sensing on each of the sub-bands. The base station apparatus 110 may also include a plurality of carrier sensing units 515 for performing carrier sensing on the respective sub-bands.

The busy states 1511, 1513 of the respective sub-bands SB1, SB3 end in the subframe period t1. Therefore, if no new busy state is detected during the DIFS time 1521 and the backoff time 1531 from the beginning of the subframe period t2, the base station apparatus 110 outputs a data signal 1541 immediately over the sub-band SB1 after the backoff time 1531 expires. If no new busy state is detected during the DIFS period 1521 and the backoff time 1533 from the beginning of the subframe period t2, the base station apparatus 110 outputs the data signal 1543 immediately over the sub-band SB3 after the backoff time 1533 expires.

A plurality of signals to be multiplexed over the same subframe period have the same value as the timing at which the base station apparatus 110 starts transmitting the data signal. The base station apparatus 110 therefore transmits a timing information 1545B indicating the timing at which the transmissions of the data signal 1541 and the data signal 1543 are started, as well as the DL assignment 1545A, over the LC. In such a case, the terminal apparatus 101 decodes the data signal addressed to the terminal apparatus 101 using the DL assignment 1545A and the timing information 1545B.

For example, the terminal apparatus 101 receives the multiplexed data signals in the subframe period t2 and the subframe period t3, and retains the signals in the buffer. The terminal apparatus 101 identifies the sub-band over which the data addressed to the terminal apparatus 101 has been received, from the DL assignment 1545 transmitted in the subframe period t3. At this time, if the sub-band over which the data addressed to the terminal apparatus 101 has been received is SB01, the terminal apparatus 101 takes out the data signal 1541 received over the sub-band SB01, from the signals retained in the buffer. The terminal apparatus 101 then decodes the data signal 1541 using the timing information 1545B.

### Third Embodiment

### [Example of Operation of Wireless Communication System According to Third Embodiment]

The base station apparatus 110 according to the first embodiment keeps transmitting, when the base station apparatus 110 keeps transmitting data signals from some point in time before the arrival of the end of a subframe period, the timing information indicating the timing at which the transmissions of the data signals are started in the respective subframe periods. However, the embodiment is not limited thereto. For example, the base station apparatus 110 may synchronize the timing for outputting the data signal to the subframe timing by outputting any one of the data signals, and then transmitting another data signal having a data length whose transmission can be completed before the subsequent subframe period starts. Such an embodiment will now be explained as a third embodiment of the present invention.

The base station apparatus 110 and the terminal apparatus 101 according to the third embodiment described below by the same functional configurations as those illustrated in FIGS. 2 and 3, so that the explanations thereof are omitted below. It is also assumed herein that the process explained below is implemented as a process performed by the MAC control unit 516 illustrated in FIG. 2, for example.

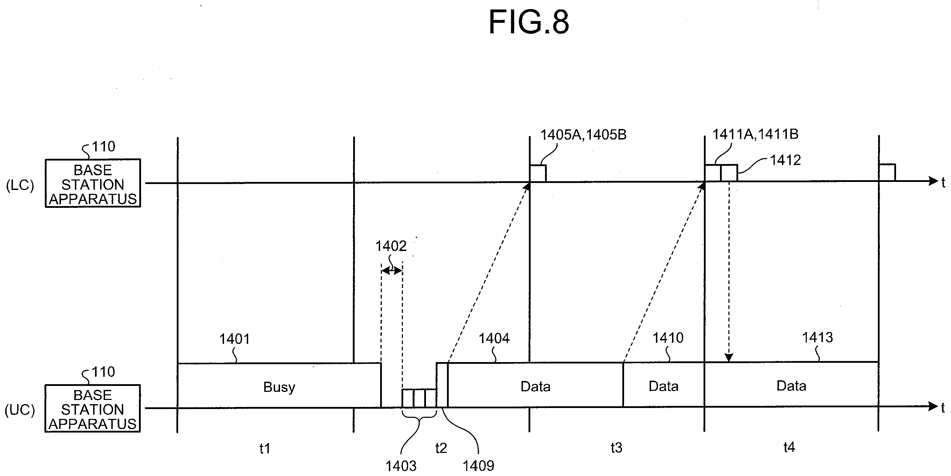

To begin with, an example of an operation of the base station apparatus 110 according to the third embodiment will be explained with reference to FIG. 8. FIG. 8 is a schematic illustrating an example of an operation in which the base station apparatus according to the third embodiment transmits a data signal over the UC. In this schematic, the horizontal axis represents the time (t) in units of a subframe. Furthermore, in the example illustrated in FIG. 8, the horizontal axis represents the time (t) in the units of a subframe unit, and the data output by the base station apparatus 110 over the LC, and the data output by the base station apparatus 110 over the UC are illustrated, in the same manner as the example illustrated in FIG. 4.

In the example illustrated in FIG. 8, the UC is at a busy state 1401 during the subframe period t1 to some point in time in the subframe period t2 as a result of another LTE system communicating data over the UC, and the busy state 1401 ends before the end of the subframe period t2 arrives. In such a case, if no new busy state is detected during a backoff time 1403 that is subsequent to the busy state 1401 and the expiration of the DIFS time 1402, the base station apparatus 110 transmits a dummy signal 1409 until the next symbol period starts. The base station apparatus 110 then ends outputting the dummy signal 1409 at the same time as the symbol period ends, and starts transmitting the data signal 1404.

The base station apparatus 110 transmits a DL assignment 1405A and timing information 1405B indicating the timing at which the transmission of the data signal 1404 is started over the LC, in the subframe period t3 subsequent to the subframe period t2 in which the transmission of the data signal 1404 is started. If the base station apparatus 110 starts transmitting the data signal 1405 before the end of the subframe period t2, the base station apparatus 110 will end up transmitting the data signals that are to be continuously transmitted, before the respective subframe periods end. As a result, the base station apparatus 110 ends up needing to transmit a DL assignment and timing information in each of subframe periods, while the base station apparatus 110 continues to transmit the data signals.

To address this issue, when the base station apparatus 110 outputs data signals continuously, the base station apparatus 110 generate a data signal having a data length that can be transmitted within a period from when the output of one of the data signals is completed to when the subsequent subframe period starts, and outputs the data signal. For example, the base station apparatus 110 generates a data signal 1410 having a data length that can be transmitted within a period from when the transmission of the data signal 1404 is completed to when the subframe period t4 starts, and starts transmitting the data signal 1410 subsequently to the data signal 1405. The base station apparatus 110 then transmits timing information 1411B for the data signal 1410, as well as the DL assignment 1411A, over the LC, in the subframe period t4.

In such a case, the base station apparatus 110 can complete the transmission of the data signal 1410 at the same timing at which the subframe period t3 ends. As a result, the base station apparatus 110 can transmit the data signal 1413 to be transmitted subsequently to the data signal 1410, at the same timing as the subframe period t4 starts. In other words, the base station apparatus 110 can transmit the data signal 1410 at the timing synchronized with the subframe timing. In such a case, the base station apparatus 110 omits generation and transmission of the timing information subsequently to the subframe timing t4. As a result, the base station apparatus 110 can cut down the computational resources and communication resources.

After transmitting the DL assignment 1411A and the timing information 1411B associated with the data signal 1410, the base station apparatus 110 transmits the DL assignment 1412 associated with the data signal 1413 in the subframe period t4. As a result, subsequently to the subframe period t4, the base station apparatus 110 can transmit the data signal and the DL assignment within the same subframe period.

The base station apparatus 110 may also perform the process described above in any of the subframe periods. For example, when the base station apparatus 110 performs burst transmissions of data signals, the base station apparatus 110 may perform the process described above after the first data signal is transmitted, or may perform the process described above after a predetermined number of data signals are transmitted, or before the data signal previous to the last data signal is transmitted.

### [Sequence of Process Performed by Wireless Communication System according to Third Embodiment]

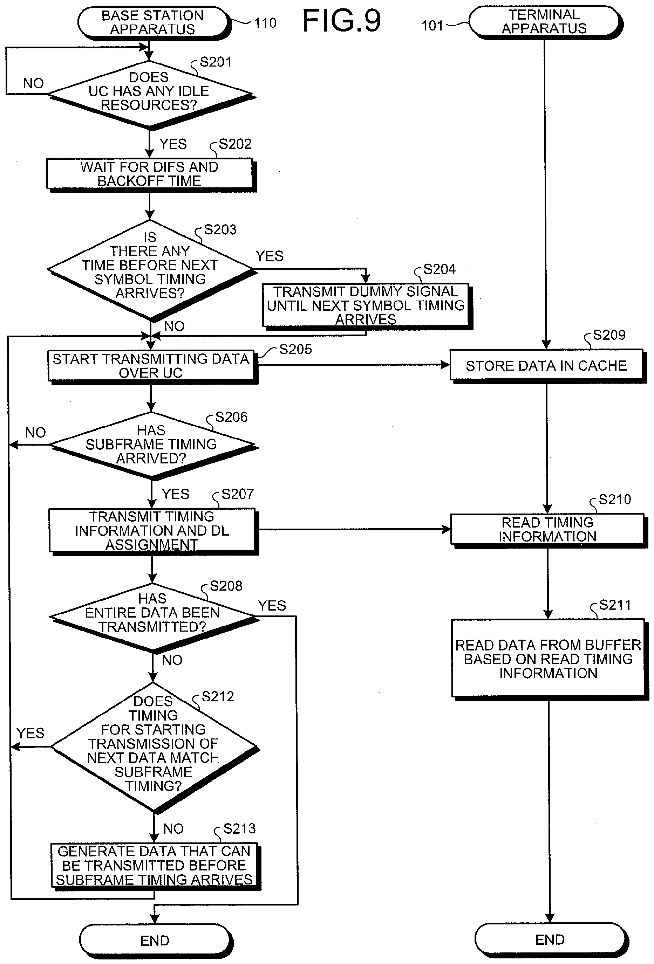

An example of the sequence of a process performed in a wireless communication system 100 according to the third embodiment will now be explained with reference to FIG. 9. FIG. 9 is a flowchart for explaining an example of the sequence of a process performed in the wireless communication system according to the third embodiment. In the example illustrated in FIG. 9, the sequence of a process performed by the base station apparatus 110 and the sequence of a process performed by the terminal apparatus 101 are illustrated, in the same manner as in FIG. 6. Furthermore, Steps S201 to S211 in the process illustrated in FIG. 9 are the same as Steps S101 to S111 illustrated in FIG. 6, so that the explanations thereof are omitted herein.

To begin with, the base station apparatus 110 determines whether the entire data has been transmitted (Step S208). If the entire data has not been transmitted, the base station apparatus 110 determines whether the timing for starting the transmission of a data signal to be transmitted next matches a subframe timing (Step S212). If the timing for starting the transmission of the data signal to be transmitted next does not match a subframe timing (No at Step S212), the base station apparatus 110 performs the following process.

In other words, the base station apparatus 110 generates a data signal having a data length that can be transmitted after the data signal currently being transmitted, and before the next subframe timing arrives (Step S213), and transmits the generated data signal over the UC (Step S205). If the timing at which the transmission of the next data signal to be transmitted is to be started matches a subframe timing (Yes at Step S212), the base station apparatus 110 performs Step S205.

### [Advantageous Effects Achieved by Third Embodiment]

As described above, when the base station apparatus 110 performs burst transmissions of data signals, the base station apparatus 110 outputs a data signal having a data length whose transmission can be completed before the subsequent subframe period starts, after the base station apparatus 110 transmits any one of the data signals. The base station apparatus 110 then transmits the remaining data signals. Therefore, the base station apparatus 110 can synchronize the timing at which the output of the data signal is started with one of the subframe timings even when the output of the data signal is started at some timing before a subframe period expires. As a result, because the base station apparatus 110 can omit the generation and the transmission of the timing information, the computational resources and the communication resources can be reduced.

Furthermore, because the base station apparatus 110 omits the transmission of the timing information for a data signal transmitted at a subframe timing, computational resources and communication resources can be reduced.

### Fourth Embodiment

Explained above are some embodiments of the present invention, but the embodiment may be implemented in any other various configurations other than those according to the embodiments described above. In the explanation hereunder, other embodiments included in the scope of the present invention will now be explained as a fourth embodiment of the present invention.

### [Process of Matching Data Signal Transmission Timing]

In the fourth embodiment described above, the base station apparatus 110 synchronizes the timing at which a data signal is transmitted to a subframe timing by outputting a data signal having a data length whose transmission can be completed before the subsequent subframe period starts, after transmitting any one of the data signals is completed; however, the embodiment is not limited thereto. For example, the base station apparatus 110 may gradually reduce the amount of offset between the timing at which a data signal is transmitted and a subframe timing by using a length that is different from the subframe length as a data length of the data signal, and eventually achieve the synchronization.

In this example, the base station apparatus 110 generates and transmits a data signal having a data length that can be transmitted within a period from when an idle resource in the UC is detected to when the next subframe timing is detected, and then transmits a data signal having the subframe length. However, because the timing at which the UC becomes idle is unknown, in some cases, the base station apparatus 110 does not have enough time to generate a data signal having such a data length depending on the timing at which the idle state of an UC resource is detected.

To address this issue, when the base station apparatus 110 does not have enough time to generate a data signal having a data length that can be transmitted within a period from when an idle resource in the UC is detected to when the next subframe timing is detected, the base station apparatus 110 may perform the following process. For example, the base station apparatus 110 may transmit a predetermined control signal or user data within a period from when an idle resource in the UC is detected to when the next subframe timing is detected.

### [About Functional Configurations]

Some of the processes explained above to be performed automatically may be manually performed, entirely or partly. Furthermore, some of the processes explained above to be performed manually may be automatically performed, entirely or partly, using some known methods. In addition, the sequence of the processes, the specific names, and the information such as various types of data and parameters explained herein or illustrated in the drawings may be changed in any way, except explicitly specified otherwise.

Furthermore, the elements included in each of the apparatuses illustrated in the drawings are merely functional and conceptual representations, and do not need to be configured physically in the way as illustrated in the drawing. In other words, the specific ways in which each of the apparatuses is distributed or integrated are not limited to those illustrated in the drawings. In other words, such specific configurations may be, entirely or partly, functionally or physically distributed or integrated into any units depending on various loads and utilizations.

Furthermore, the processing functions executed by each of the apparatuses may be, entirely or partly, implemented as a central processing unit (CPU) and a computer program parsed and executed by the CPU, or as a piece of hardware using a wired logic.

### [Hardware Configuration]

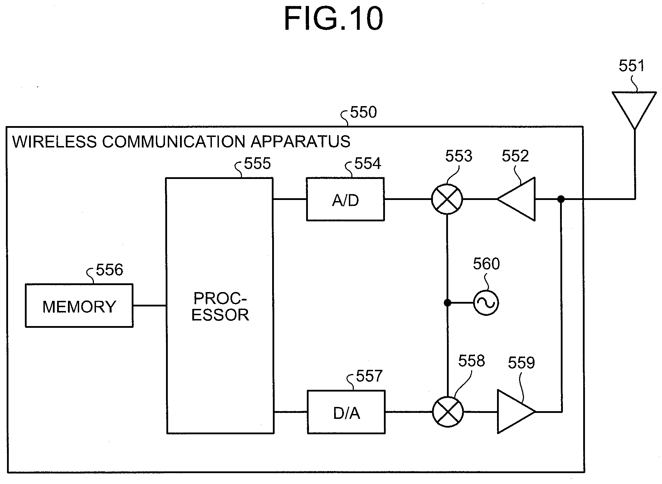

The base station apparatus 110 described above can be implemented as an eNB as defined in LTE, for example. An example of a hardware configuration of an eNB implementing the base station apparatus 110 described above in the first to the third embodiments will now be explained with reference to FIG. 10.

FIG. 10 is a schematic illustrating an example of the hardware configuration of the eNB. The base station apparatus 110 can be implemented as a wireless communication apparatus 550 illustrated in FIG. 10, for example. The wireless communication apparatus 550 includes, for example, a transmitting/receiving antenna 551, an amplifier 552, a multiplier 553, an analog-to-digital converter 554, a processor 555, and a memory 556. The wireless communication apparatus 550 includes a digital-to-analog converter 557, a multiplier 558, an amplifier 559, and an oscillator 560. The wireless communication apparatus 550 may also include an interface for communicating with external communication apparatuses over the wire.

The transmitting/receiving antenna 551 receives a signal having been wirelessly transmitted near the wireless communication apparatus 550, and outputs the received signal to the amplifier 552. The transmitting/receiving antenna 551 also wirelessly transmits a signal output from the amplifier 559 around the wireless communication apparatus 550.

The amplifier 552 amplifies the signal output from the transmitting/receiving antenna 551. The amplifier 552 then outputs the amplified signal to the multiplier 553. The multiplier 553 performs a frequency conversion from the high-frequency band into the baseband, by multiplying the signal output from the amplifier 552 with the clock signal output from the oscillator 560. The multiplier 553 then outputs the signal applied with the frequency conversion to the analog-to-digital converter 554.

The analog-to-digital converter 554 (A/D) is an analog-to-digital converter (ADC) that converts the analog signal output from the multiplier 553 into a digital signal. The analog-to-digital converter 554 outputs the signal having been converted into a digital signal to the processor 555.

The processor 555 controls the entire wireless communication apparatus 550. The processor 555 can be implemented as a CPU or a digital signal processor (DSP), for example. The processor 555 performs the process of receiving a signal output from the analog-to-digital converter 554. The processor 555 performs the process of generating a signal to be transmitted by the wireless communication apparatus 550, and outputting the generated signal to the digital-to-analog converter 557.

The memory 556 includes a main memory and an auxiliary memory, for example. An example of the main memory includes a random access memory (RAM). The main memory is used as a working area for the processor 555. The auxiliary memory is a nonvolatile memory such as a magnetic disk or a flash memory. The auxiliary memory stores therein various types of computer programs for causing the processor 555 to operate. The computer programs stored in the auxiliary memory are loaded onto the main memory, and executed by the processor 555. The auxiliary memory also stores therein various predetermined thresholds, for example.

The digital-to-analog converter 557 is a digital-to-analog converter (DAC) that converts the digital signal output from the processor 555 into an analog signal. The digital-to-analog converter 557 outputs the signal having been converted into an analog signal to the multiplier 558.

The multiplier 558 performs a frequency conversion from the baseband into the high-frequency band by multiplying the signal output from the digital-to-analog converter 557 with the clock signal output from the oscillator 560. The multiplier 558 then outputs the signal applied with the frequency conversion to the amplifier 559. The amplifier 559 amplifies the signal output from the digital-to-analog converter 557. The amplifier 559 then outputs the amplified signal to the transmitting/receiving antenna 551.

The oscillator 560 oscillates a clock signal (an alternating current signal having a form of continuous wave) at a predetermined frequency. The oscillator 560 then outputs the oscillated clock signal to the multipliers 553, 558.

The antennas 501, 502, 531, 532 illustrated in FIG. 2 can be implemented by, for example, the transmitting/receiving antenna 551. The wireless processing unit 504, 509, 524, 530 illustrated in FIG. 2 can be implemented by, for example, the amplifier 552, the multiplier 553, the analog-to-digital converter 554, the digital-to-analog converter 557, the multiplier 558, the amplifier 559, and the oscillator 560. The other elements illustrated in FIG. 2 can be implemented by, for example, the processor 555 and the memory 556.

The terminal apparatus 101 may be implemented as user equipment (UE) as defined in LTE, for example. Such a terminal apparatus 101 can be implemented as a wireless communication apparatus 550 illustrated in FIG. 10, in the same manner as the base station apparatus 110. In such a case, the wireless communication apparatus 550 does not have to include the interface for communicating with external communication apparatuses over the wire.

### [Explanation of Reference]

100 wireless communication system
101 terminal apparatus
110 base station apparatus
111 cell
501, 502, 531, 532, 600 antenna
503, 601 licensed band receiving unit
504, 509, 524, 530, 602, 608, 626, 632 wireless processing unit
505, 510, 603, 609, 623, 629 FFT processing unit
506, 511, 606, 612 demodulating unit
507, 512, 614 decoding unit
508, 607 unlicensed band receiving unit
513 MAC/RLC processing unit
514 radio resource control unit
515, 617 carrier sensing unit
516 MAC control unit
517, 619 packet generating unit
518 MAC scheduling unit
519, 621 licensed band transmitting unit
520, 526 encoding unit
521, 527 modulating unit
522, 528, 622, 628 multiplexing unit
523, 529, 605, 611, 625, 631 IFFT processing unit
525, 627 unlicensed band transmitting unit
550 wireless communication apparatus
551 transmitting/receiving antenna
552, 559 amplifier
553, 558 multiplier
554 analog-to-digital converter
555 processor
556 memory
557 digital-to-analog converter
560 oscillator
604, 610 equalizing unit
613 buffer
615 RTS signal detecting unit
616 RRC processing unit
618 MAC processing unit
620 encoding/modulating unit
624, 630 frequency mapping unit

## Claims

1. A wireless communication system that performs wireless communication using a first bandwidth dedicated to the wireless communication system, and a second bandwidth shared between the wireless communication system and another wireless communication system, the wireless communication system comprising:
a base station apparatus configured to start transmitting, when an idle state of the second bandwidth is detected, a data signal having a subframe length over the second bandwidth even before a subframe period ends, and transmit control information for decoding the data signal and timing information indicating timing at which the data signal starts being transmitted over the first bandwidth, at a border of a next subframe; and
a terminal apparatus configured to retain the data signal having been transmitted over the second bandwidth, and decode data from the retained data signal using the timing information and the control information having been transmitted over the first bandwidth.

2. The wireless communication system according to claim 1, wherein the base station apparatus transmits the timing information together with the control information to be transmitted in a subframe period subsequent to the subframe period in which the data signal starts being transmitted.

3. The wireless communication system according to claim 1 or 2, wherein the subframe period includes a plurality of symbol periods, and
the base station apparatus transmits, when an idle state of the second bandwidth is detected before one of the symbol periods ends, a dummy signal until next one of the symbol periods starts.

4. The wireless communication system according to claim 3, wherein, when the data signal is to be transmitted in plurality in a continuous manner, the base station apparatus transmits one of the data signals, and then outputs a data signal having a data length allowing a transmission of the data signal to be completed before a next subframe period starts.

5. The wireless communication system according to claim 4, wherein, when the data signal is transmitted at a same time as a subframe period starts, the base station apparatus omits transmitting the timing information indicating timing at which the data signal starts being transmitted.

6. A base station apparatus included in a wireless communication system performing wireless communication using a first bandwidth dedicated to the wireless communication system, and a second bandwidth shared between the wireless communication system and another wireless communication system, the base station apparatus comprising:
a first transmitting unit configured to start transmitting, when an idle state of the second bandwidth is detected, a data signal having a subframe length over the second bandwidth even before a subframe period ends; and
a second transmitting unit configured to transmit control information for decoding the data and timing information indicating timing at which the data signal starts being transmitted over the first bandwidth, at a boundary of a subframe subsequent to the transmission of the data signal.

7. The base station apparatus according to claim 6, wherein the second transmitting unit transmits the timing information together with the control information to be transmitted in a subframe period subsequent to the subframe period in which the data signal starts being transmitted.

8. The base station apparatus according to claim 6 or 7, wherein the subframe period includes a plurality of symbol periods, and
the first transmitting unit transmits, when an idle state of the second bandwidth is detected before one of the symbol periods ends, a dummy signal until next one of the symbol periods starts.

9. The base station apparatus according to claim 8, wherein, when the data signal is to be transmitted in plurality in a continuous manner, the first transmitting unit transmits one of the data signals, and then outputs a data signal having a data length allowing a transmission thereof to be completed before a next subframe period starts.

10. The base station apparatus according to claim 9, wherein, when the first transmitting unit transmits the data signal at a same time as a subframe period starts, the second transmitting unit omits transmitting the timing information indicating timing at which the signal starts being transmitted.

11. A terminal apparatus included in a wireless communication system performing wireless communication using a first bandwidth dedicated to the wireless communication system, and a second bandwidth shared between the wireless communication system and another wireless communication system, the terminal apparatus comprising:
a retaining unit configured to retain a data signal received from a base station apparatus that starts transmitting, when an idle state of the second bandwidth is detected, data signals over the second bandwidth even before a subframe period ends, the retaining unit retaining the data signal for at least a period of the subframe;
a receiving unit configured to receive control information for decoding the data and timing information indicating timing at which the data signal starts being transmitted, over the first bandwidth; and
a decoding unit configured to decode data from the data signal retained by the retaining unit, using the control information and the timing information received by the receiving unit after the base station apparatus has transmitted the data signal.
